Europäisches Patentamt

European Patent Office

Office européen des brevets

(19)

(11) **EP 1 269 398 B1**

(12) **EUROPEAN PATENT SPECIFICATION**

(45) Date of publication and mention
of the grant of the patent:
**03.11.2004 Bulletin 2004/45**

(51) Int Cl.⁷: **G06K 9/00**

(21) Application number: **01910396.9**

(86) International application number:
**PCT/US2001/003275**

(22) Date of filing: **31.01.2001**

(87) International publication number:
**WO 2001/059690 (16.08.2001 Gazette 2001/33)**

(54) **BIOMETRIC FALSE ACCEPT DETECTION**

DETEKTION FALSCHER AKZEPTANZ BEI BIOMETRISCHER PRÜFUNG

DETECTION D'ERREURS SUPPORTABLES EN BIOMETRIE

(84) Designated Contracting States:
**AT BE CH CY DE DK ES FI FR GB GR IE IT LI LU
MC NL PT SE TR**

(30) Priority: **09.02.2000 US 501355**

(43) Date of publication of application:
**02.01.2003 Bulletin 2003/01**

(73) Proprietor: **VERIDICOM, INC.
Sunnyvale, CA 94089 (US)**

(72) Inventor: **RUSSO, Anthony P.
New York, NY 10023 (US)**

(74) Representative: **Viering, Jentschura & Partner
Postfach 22 14 43
80504 München (DE)**

(56) References cited:
**EP-A- 0 862 131          US-A- 5 935 071**

EP 1 269 398 B1

**EP 1 269 398 B1**

**Description**

BACKGROUND OF THE INVENTION

1. Field of the Invention

This invention is related to the field of biometrics, and in particular to detecting errors when validating biometric data.

2. Background

Biometric data is frequently used to verify or authenticate a particular individual who desires to gain access to some facility, be it a door entry system, a computer system, or a particular level of authorization in a computer program.

A drawback to many computer systems is that they employ passwords, which must be memorized. Users frequently forget their passwords or they write them in non-secure place. Biometric sensors, which measure certain biological properties and use statistical analysis to validate a user, generally provide a better solution to passwords, at least in so far as the biometric data used to validate the user is always present -- yet unknown. This is to say that there is no password that needs to be memorized and there is less risk of the validating information being compromised.

One drawback to biometric systems is that wide-spread deployment is generally not practicable. At least one reason for this is that biometric systems often employ an "escrow" functionality. The escrow functionality generally involves storage of a valid set of biometric data in a remote, presumably secure, server (hereinafter an "escrow server"). A measuring function typically records a user's biometric data and then compares the recorded data with data in the escrow server. If the data matches, then the escrow server may issue a response that the user passed a biometric test.

However, having a central escrow server creates problems. First, a cracker may break into the escrow server and steal or manipulate the stored biometric data. Thus, privacy becomes an issue. Second, an unauthorized server may issue false indicators that particular recorded data matched the stored value in the escrow server.

A solution to the escrow server is to employ a smartcard based system. A smartcard is small, portable card (much like a credit card) consisting of a memory that persistently stores the biometric data. When access to a particular facility is desired, a user simply inserts the smartcard into a smartcard reader and the reader extracts the biometric data from the smartcard. The reader subsequently compares the extracted biometric data against measured biometric data from the biometric sensor. Alternatively, the biometric sensor provides the measured biometric data to the smartcard for processing.

However, even this approach has drawbacks. One drawback is that smartcards, because of their physical constraints, are usually low-power systems that do not allow for a sophisticated microprocessor. Instead, a small instruction set microprocessor is used that has limited computational abilities and a limited memory. Due to the limited computational power of a smartcard, tradeoffs in accuracy need to be made if biometric data is to be verified in a reasonable amount of time. Therefore, it is possible that when the smartcard microprocessor attempts to compare measured data from a biometric sensor and a template stored in the smartcard, a certain number of "false accepts" occur. That is, the smartcard may erroneously accept biometric data that does not truly match the stored template, or the smartcard may accept biometric data that is a spoof of the item from which biometric data is collected.

An example of an existing fingerprint sensing system is European Patent Application No. EP 0 862 131 A2, by Applicant NEC. The NEC application describes a stripe pattern matching system, for matching fingerprint stripes with file values. According to page 1-4 of the NEC application, minutia are identified, together with a core minutia, and stripes are created. A number of reference stripe patterns are stored in a file (for instance, corresponding to a number of criminals). When a subsequent fingerprint is desired to be analyzed, the system creates another stripe pattern and compares it to the stripe patterns in the file. Deviations of x- and y- coordinates are recorded.

Then, the system begins to re-compute the newly created stripe pattern coordinates by rotating the minutia stripe patterns about the coordinate axis. NEC discloses that the coordinates are rotated, beginning with a rotation angle for the stripe pattern at a fixed -29.4 degrees, through 1.4 degree increments, to 28.0 degrees. For each increment of rotation of the minutia stripe pattern, the re-computed coordinates are compared against the coordinates in the stored stripe pattern file, and the deviations between these coordinates are recorded ("shifting coordinates"). As the NEC application points out, this system can result in over 12,000,000 minutia extractions and computations for each fingerprint comparison, which NEC application also points out is simply unworkable (see page 4, lines 35-39, and page 4, lines 56 through page 5, line 3).

NEC then proposes an improvement to the prior system. Because the number of comparisons is high, especially in a criminal match environment, it is simply inefficient to prepare individual comparisons against a database of potentially millions of criminals. With this in mind, NEC discloses a way to create a "searching stripe pattern", so that the number of comparisons and calculations can be significantly reduced. NEC uses the same computational basis for determining matches as before (page 7, lines 1-13 and lines 42-46), but now has the advantage of significantly improved processing time by elimination of file stripe patterns that clearly do not need to be compared: NEC thus proposes a sort of "preprocessing" technique to quickly poor candidates. Effectively, NEC proposes making a "window" about minutia stored in memory, the window giving a tolerance for matching filed stripe patterns. If the minutia of a particular filed stripe pattern is not in the "window", then it is removed, before

As NEC points out at page 8, lines 25-28, the difference between their system and advantage of their system over the prior systems is that a most appropriate rotation angle, and hence shifting coordinates, can be calculated so that a most appropriate searching stripe pattern can be specified. This will reduce the scope, and hence the time, of a search for a matching striping pattern.

SUMMARY OF THE INVENTION

A method and system as defined is claims 1 and 12 for detecting false accepts in a biometric authentication system is provided. According to an aspect of the invention, a sequence of threshold tests are performed on measured biological data after it is compared to valid stored data. According to one embodiment, the threshold tests comprise a distance test, a rotational angle test, and, optionally, an alternate rotation angle test.

In a fingerprint sensing environment, the distance test examines the separation between selected minutiae in a measured fingerprint and corresponding minutiae in a stored constellation. In the rotational angle test, a total angle difference between selected minutiae in the measured fingerprint and corresponding minutiae in the stored constellation is examined. In the alternate rotation angle test, a Gestalt rotational difference between selected minutiae in the measured fingerprint and in the stored constellation is determined. Thus, two independent calculations of the rotation angle between the sensed and valid constellations can be reconciled.

In each of the tests, threshold parameters provide a cutoff for accepting or rejecting a measured fingerprint. According to one embodiment, the tests are sequentially performed and if any test fails, then the matched minutiae are rejected as "false accepts".

BRIEF DESCRIPTION OF THE DRAWINGS

FIG. 1 depicts a smartcard system comprising a smartcard, a smartcard reader, and a biometric sensor.
FIG. 2A depicts fingerprint and select minutia.
FIG. 2B depicts data parameters of a selected pair of minutiae.
FIG. 3 depicts a data structure in a fingerprint template.
FIG. 4 depicts data structures for matched fingerprint minutiae.
FIG. 5 is a flowchart depicting an improved fingerprint template matching technique.
FIGS. 6-7 are flowcharts depicting false accept processing.
FIGS. 8A-C are conceptual schematics of a minutiae distance test.
FIGS. 9A-C are conceptual schematics of a minutiae angle test.
FIGS. 10A-C are conceptual schematics of a minutiae rotation angle test.

DETAILED DESCRIPTION OF THE PREFERRED EMBODIMENTS

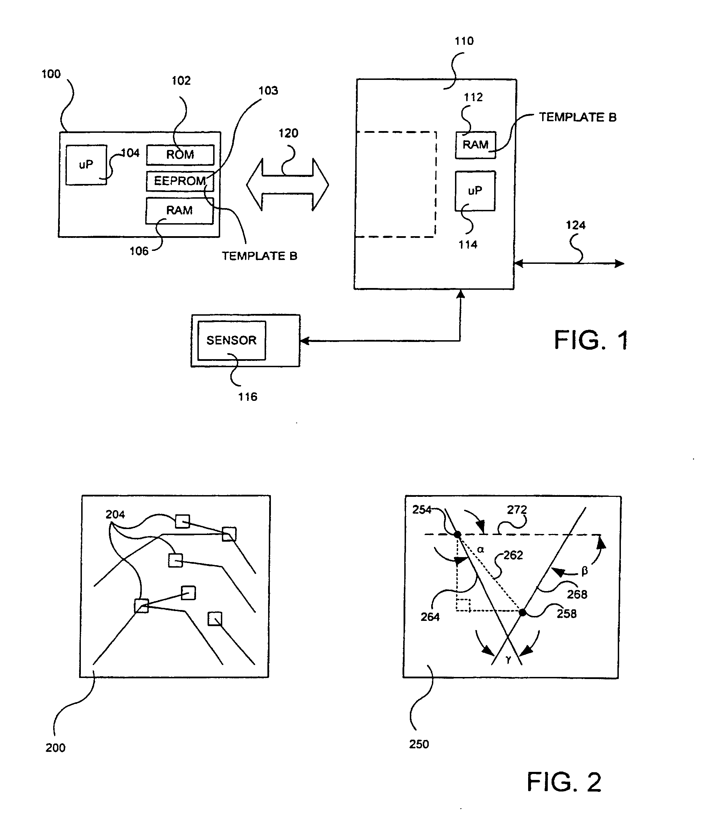

FIG. 1 depicts a smartcard system comprising a smartcard 100, a smartcard reader 110, and a biometric data sensor 116. The smartcard 100 typically comprises a microprocessor 104 and a RAM 106, EEPROM 103(or equivalent persistent yet programmable memory, such as "flash") and ROM 102, each communicatively coupled to the microprocessor 104. Executable software code (also called a "computer program") resides in ROM 102. RAM 106 is used for storage of variables and other runtime data need by the microprocessor 104. The smartcard reader 110 includes a microprocessor 114 and RAM 112. The smartcard reader 110 may further comprise a ROM, in which executable software code resides, or the software code may be loaded over a bus 124 from an external storage device or computer. In operation, the smartcard 100 is inserted into the smartcard reader 110, wherein data is either transferred from the smartcard to the smartcard reader, or from the smartcard reader 110 to the smartcard 100

The smartcard system depicted in FIG. 1 further comprises a biometric sensor 116, which is preferably a fingerprint sensor. The sensor 116 is configured to receive a finger. When a finger is placed over the sensor 116, the sensor 116 scans the finger's print and creates a fingerprint image. (It is worth noting that the image can be an analog signal that is later converted into a digital representation or "template".) A presently preferred fingerprint sensor is the FPS110 available from Veridicom Corporation in Santa Clara, California <http://www.veridicom.com>, or alternatively the Veridicom 5th Sense (TM) peripheral sensor.

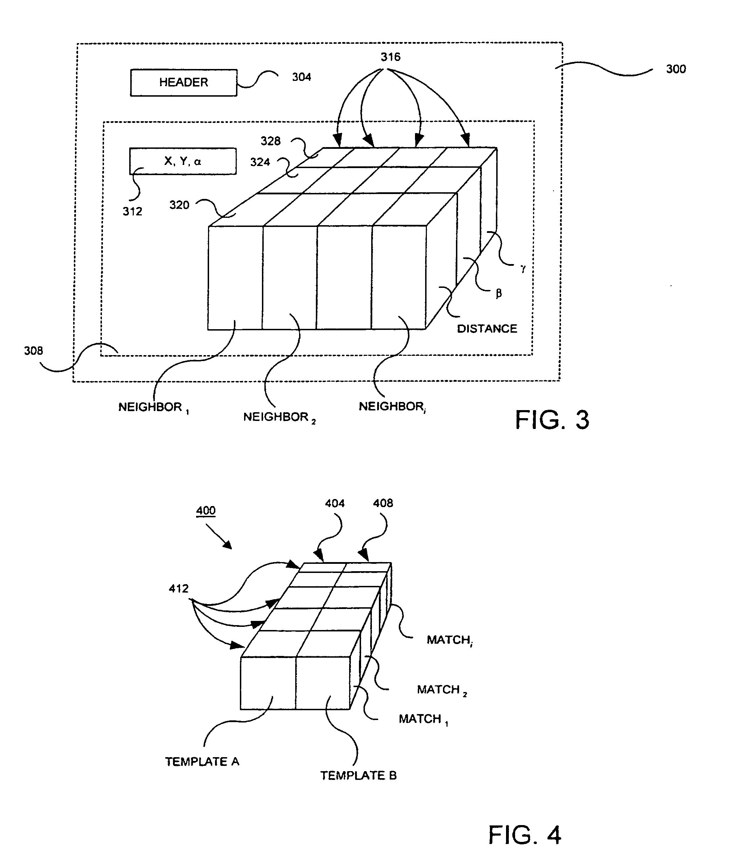

An exemplary sensed fingerprint image 200 is shown in FIG. 2A. A series of ridges have endpoints and bifurcations, which are commonly described as "minutia" 204. Select minutia from a sensed fingerprint are converted from their sensed form to a digital form as a data structure, one embodiment being a multidimensional fingerprint constellation (or simply "constellation"). An embodiment of a constellation is described below with reference to FIG. 3.

When stored as a constellation, parameters are chosen to define the relationship between individual minutiae 204 in the fingerprint. Referring to FIG. 2B, a geometric representation 250 of two minutiae is shown. A first minutia 254 is selected as a reference minutia. A tangent 264 to the ridge of the first minutia 254 is determined and then extrapolated to intersect an x-axis 272 (for example, an x-axis of the sensor 116). An angle "alpha" is measured between the x-axis 272 and the tangent line 264. The x- and y-coordinates of the minutia 254 are also recorded. The first minutia 254 is then used a reference point to compare relative values with neighboring minutiae.

For example, a second minutia 258 is selected as a neighbor to minutia 254. X- and y-coordinates of the second minutia 258 are recorded, thus a distance 262 between the first minutia 254 and the second minutia 258 can be determined, as can an angle "beta" -- formed between lines 272 and 268. The difference between angle alpha and angle beta, or angle "gamma" can be calculated by subtracting one angle from the other. Angle gamma can be represented as the angle formed between tangent line 264 (minutia 254) and tangent line 268 (minutia 258).

The process described above can be repeated comparing a third, fourth, fifth, etc. minutia to the first minutia 254. Finally, a multidimensional fingerprint constellation can be created that represents the relative values of the selected minutiae in a particular neighborhood. FIG. 3 depicts such a data structure.

The multidimensional constellation 300 comprises a header 304 that can be used to identify the make and version of the multidimensional constellation 300. A reference identifier 312 gives the x-, y- and alpha-values for the reference (or first) minutia that is the basis for relative values in a neighborhood constellation 308. The neighborhood constellation 308 further comprises a plurality of data values for the neighbors of the reference identifier 312 (that is, the second, third, fourth, etc. minutia). There can be as many there can be as many neighborhoods 308 in a multidimensional fingerprint constellation 300 as are desired. According to one embodiment, there are one-hundred neighborhood constellations 308 in a multidimensional constellation 300.

Three columns represent the relative values between the minutiae in each neighborhood constellation 308. They are columns 320, 324, and 328, which represent a relative distance, an angle, and a relative angle difference, respectively, as is discussed above with reference to FIG. 2B. There are as many neighbors 316 in a neighborhood constellation 308 as are desired. According to one embodiment, there are fifteen neighbors 316 in a neighborhood constellation 308. (It is noted that when data is stored in the multidimensional constellation 300, it can be normalized so that the values have a uniform bit-size.)

Returning to FIG. 1, as used with the smartcard system, the fingerprint image measured by sensor 116 is transferred to RAM 112 as a multidimensional fingerprint constellation 300. For purposes of explanation, the sensed multidimensional fingerprint constellation will be referred to hereinafter as "template B", while a valid multidimensional fingerprint constellation will be referred to hereinafter as "template A".

When the smartcard 100 is inserted into the smartcard reader 110, information is exchanged over a communication channel 120, be it physical or wireless, between the smartcard 100 and the smartcard reader 110. According to an embodiment of the invention, sensed template B is serially transferred, one neighborhood (or subset of template B) at a time, to RAM 106, where it can be compared by microprocessor 104 to the valid template A that is stored in the smartcard 100, for example in EEPROM 103.

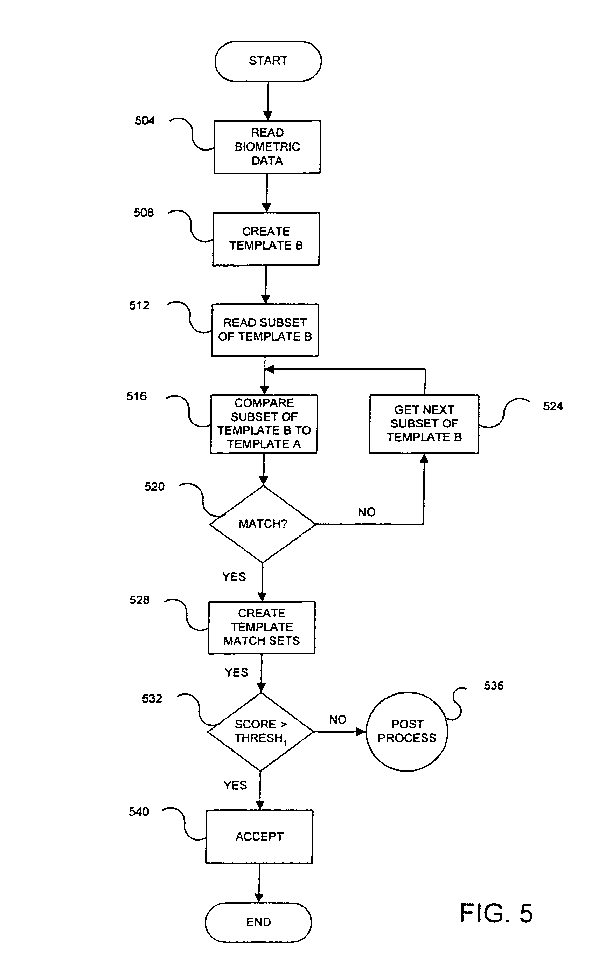

FIG. 5 is a flowchart depicting generalized steps for matching fingerprint templates. Specific details of an embodiment of the generalized steps are described in copending U.S. Patent Application Serial No. 09/354,929.

Referring to FIGS. 1 and 5, in step 504 biometric data, for example a fingerprint, is read from sensor 116. A fingerprint template (template B) is created and placed in RAM 112 in step 508. The first two steps are performed by the smartcard reader 110 and sensor 116, while the subsequent steps are generally under control of the microprocessor 104.

In step 512, a subset of template B is read from RAM 112 and transferred to RAM 106. The subset is preferably a neighborhood constellation 308. In step 520, the subset of data from template B is compared to sequential valid neighborhood constellations in template A. If the template data matches, then step 520 passes processing on to step 528. Otherwise, step 520 passes processing on to step 524, where the microprocessor 104 causes a next subset of template B to be transferred from RAM 112 to RAM 106.

In step 528, template match sets are created for each reference value corresponding to the matched minutiae in templates A and B. If the reference values corresponding to FIG. 2B are used, then three template match sets are created -- one for the x-, y-, and beta-values.

FIG. 4 depicts an exemplary template match set 400. A first column 404 holds the matched x-, y- or beta-values for template A, and a second column 408 holds the corresponding x-, y- or beta-values for template B. There are as many rows 412 in the match sets as there are matched minutia (or "matches") between templates A and B.

According to one embodiment, each template match set 400 holds four matched pairs. Each match corresponds to a "score". The more matches, the higher the score.

In step 532, the score for the matches is compared against a first threshold value. If the score is greater than the first threshold value, then the matches are determined to be valid and not "false accepts". Accordingly, processing continues to step 540 where the minutia match is accepted. However, if the score is less than or equal to the first threshold value, then post processing occurs at step 536. According to one embodiment, the first threshold value is the value four. If greater than four matches are found, then the odds of a false accept are low. However, if between one and four minutia matches are found, then the odds of a false accept are higher, thus a finer granularity of testing for a match is desired.

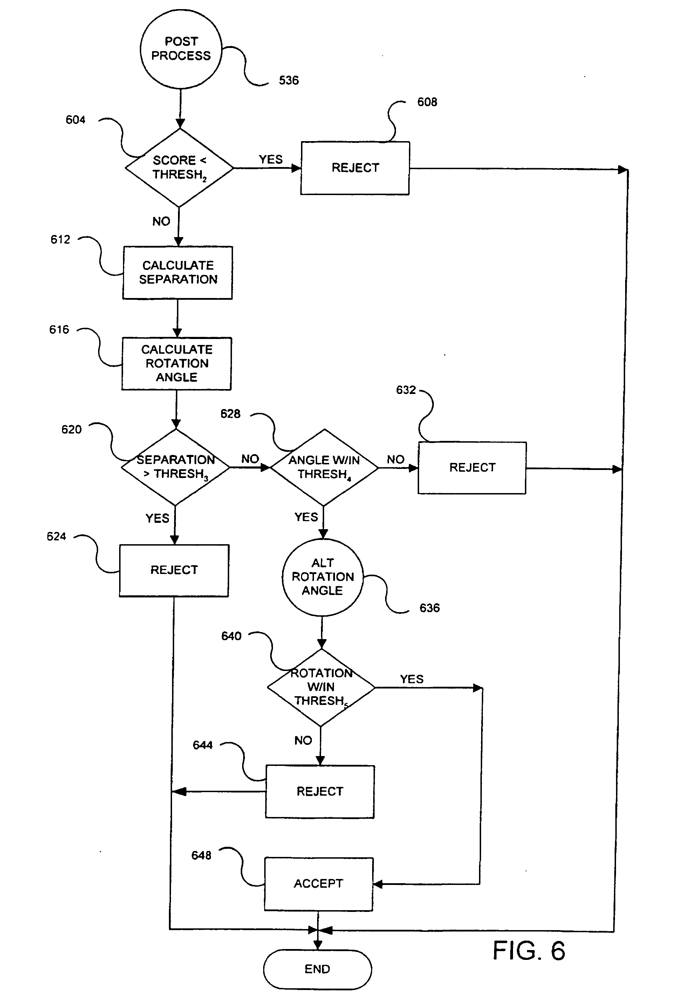

FIG. 6 is a flowchart depicting post processing of template matches that have been marked as potential false accepts. In step 604, the score is compared against a second threshold value. If the score is less than the second threshold value, then the matches are rejected -- as no meaningful finer granularity testing is possible. For example, the second threshold value can be three, so if one or two matches are found, then they are rejected in step 608 as false accepts because more certainty in the matches is desired.

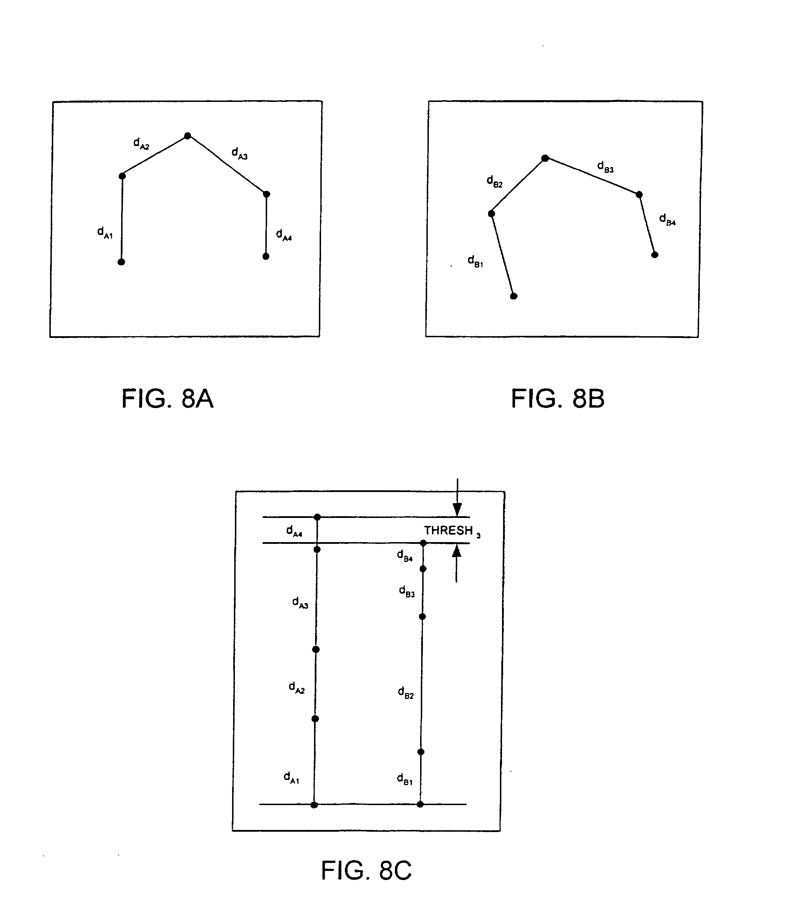

In step 612, a total separation between the minutiae in template A and then the minutiae in template B is calculated. FIGS. 8A-C show conceptual diagrams of an embodiment of a minutiae distance test corresponding to step 612. FIG. 8A shows the total separation between a series of minutiae in template A, while FIG. 8B shows the same in template B. FIG. 8C shows how the two total separations are compared to a third threshold value.

The total separation is determined by a total distance difference. In the total distance difference test, the total amount of separation between the minutiae in each template is calculated. For example, the x-value for the second match of template A is subtracted from the x-value of the first match of template A. Next, that value is squared. Then the y-value for the second match of template A is subtracted from the y-value of the first match of template A. This result is also squared. Finally, a sum of the squares of the total x- and y- differences is calculated, which yields a total distance difference or "separation" value. An equation for the total distance difference is:

$$\sum_{i=1}^{i=score}[(x_{i-1} - x_i)^2 + (y_{i-1} - y_i)^2] \quad (1)$$

As indicated in Eq. (1), the process is repeated for each x- and y-value stored in the template match sets corresponding to template A. It is also repeated for the x- and y-values corresponding template B. In an alternative embodiment, rather than squaring the difference, the sum of the absolute values of the differences can be compared, which can be less of a drain on the microprocessor's computational resources.

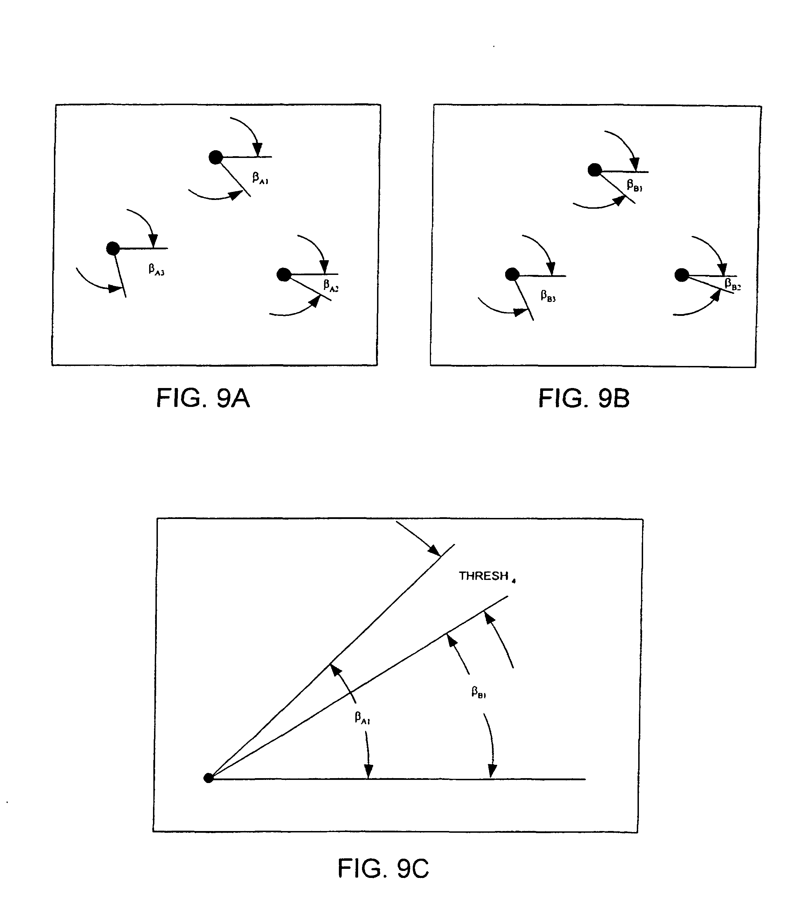

In step 616 a rotation angle is calculated. Conceptual diagrams of an embodiment of a minutiae angle test corresponding to step 616 are shown in FIGS. 9A-C. FIGS. 9A and 9B show the beta angles between each minutia in templates A and B, respectively. FIG. 9C, while showing only a single rotation angle, represents the broader concept. The sum of the differences of the beta angles (between templates A and B) is actually what is compared to the fourth threshold value. An equation for the total rotation angle, which represents the amount of rotation between the sensed and valid templates, is:

$$\frac{\sum_{i=0}^{i=score-1}[\beta_{A,i} - \beta_{B,i}]}{score} \quad (2)$$

In step 620 the separation calculated in step 612 is compared against the third threshold value. The third threshold amount can be any amount chosen by one who practices the invention and can vary depending on the types of minutia selected. For example, a greater tolerance may be expected when the minutiae are selected so as to maximize their separation, or when many minutiae are selected. However, a lesser amount of tolerance may be desired when the minutiae are selected base on their close proximity to the reference minutia. If the separation value is greater than the third threshold value, then the match is rejected as a false accept in step 624. According to an alternative embodiment, if the number of matches to be compared falls within a small range, dividing the sum by the score is not necessary because accommodation for the overestimate of the rotation angle can be accounted for in the selection of the fourth threshold value.

However, if the separation value is not greater than the third threshold value, then in step 628 the angle error from step 616 is compared to the fourth threshold value. If the angle error is outside of the fourth threshold value, then the match is rejected as a false accept in step 632. Again, the fourth threshold value can be chosen arbitrarily by one who implements the invention described herein. As was the case in step 620, the smaller the threshold value, the lower the odds that a false accept will occur and consequently greater certainty in the actual template matchings.

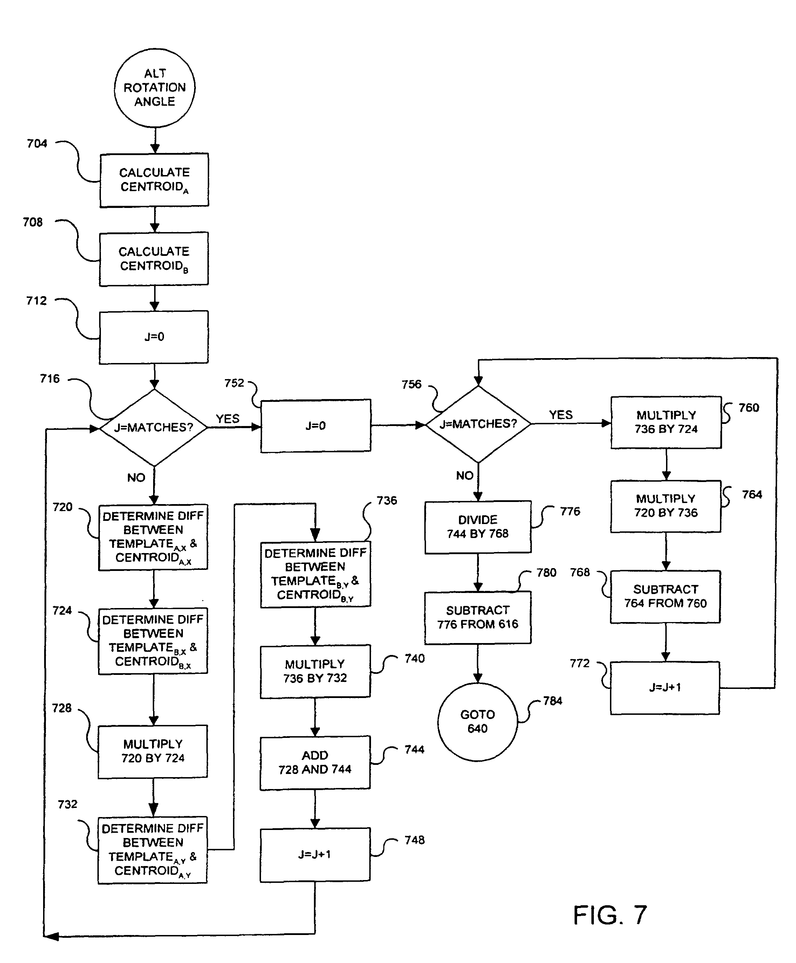

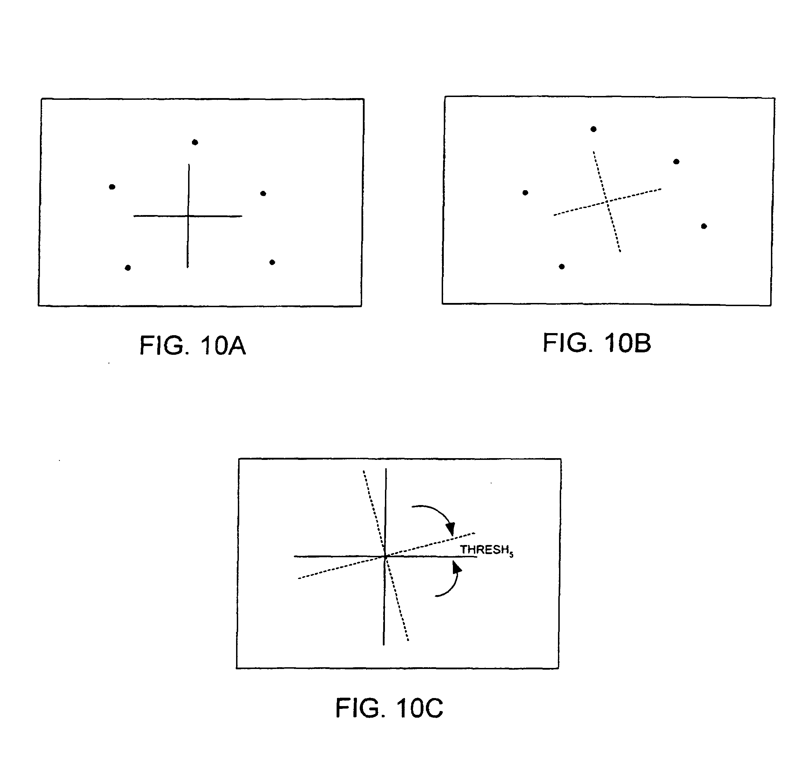

However, if the rotation angle is within the fourth threshold value, then in step 636 an alternative rotation angle between the two templates (or neighborhoods) is calculated. FIGS. 10A-C are conceptual diagrams of what is achieved by the alternate rotation angle calculation. FIG. 10A is a diagram of minutiae in template A. FIG. 10B is a diagram of minutiae in template B. FIG. 10C is a diagram showing the rotation angle between the minutiae of template A and template B, as well as a fifth threshold value. FIG. 7, described in detail below, shows one embodiment for calculating the alternate rotation angle in step 636.

In step 640, the alternate rotation angle is compared to the fifth threshold value. If the alternate rotation angle is within the fifth threshold value, then the template matches are accepted in step 648. However, if the alternate rotation angle is not within the fifth threshold value, then it is rejected in step 644. If the accept in step 648 occurs, then the template matchings are determined to be valid and not false accepts.

FIG. 7 depicts an embodiment of alternate rotation angle calculation. According to one embodiment, the alternate rotation angle is calculated so that two independent measures of the rotation between templates A and B can be compared. The first method uses the difference in the angles of the matched minutia pairs averaged over all the pairs (step 616). The second method, shown in FIG. 7 and 10A-C, uses a geometrical construct that calculates the centroids of the set of matched minutiae in each template and yields a Gestalt rotational difference.

In step 704, a centroid of template A is calculated. This is done by separately summing the x- and then the y-values for the template A values in the match templates 400, then dividing the totals by the total number of matches (or score). This normalizes the centroid for the neighborhoods of templates A and B. The same process is repeated for the x- and y-values for the template B values in the match templates 400 in step 708.

Eq. (3) shows the result obtained by steps 712 through 776. In particular, steps 712 through 748 represent the numerator of Eq. (3), while steps 752 through 772 represent the denominator of Eq. (3). Step 776 shows the division of the numerator by the denominator, while step 780 shows one embodiment of how the two independent calculations of the rotation angle can be compared.

$$\frac{\sum_{i=0}^{i=score}[(x_{A,i} - centroid_{A,x}) * (x_{B,i} - centroid_{B,x}) + (y_{A,i} - centroid_{A,y}) * (y_{B,i} - centroid_{B,y})]}{\sum_{i=0}^{i=score}[(y_{A,i} - centroid_{A,y}) * (x_{B,i} - centroid_{B,x}) - (x_{A,i} - centroid_{A,x}) * (y_{B,i} - centroid_{B,y})]} \quad (3)$$

The result of Eq. 3 is an approximation of the tangent of the rotation angle (in radians). When a greater degree of precision is needed so as to avoid approximation errors, successive approximation techniques or amplification methods can be employed when the results yield an angle approaching zero and +/- ninety degrees. Moreover, since most microprocessors used in a smartcard will not necessarily have the ability to perform floating point arithmetic, it is preferred that when the numerator or denominator is zero, that an appropriate rotation for the two templates be assumed (for example zero or ninety degrees). While most microprocessors in a smartcard 100 will have minimal mathematical functionality, the approximation made by Eq. (3) can obviously be replaced if geometric functions (e.g., sine, cosine, tangent) are included with the microprocessor's instruction set.

After step 776, the process continues to step 780, where the first rotation angle(616) is subtracted from the second (776). In step 784, the flow returns to step 640 (FIG. 6). It is noted that step 780 is not necessary, although it is used in a presently preferred embodiment as a way to reconcile the first and second independent rotation angle calculations -- ideally, the difference between the two rotations is zero.

It is noted that the test in step 640 can be changed depending on whether step 780 is performed. If step 780 is not performed, then the rotation angle determined by Eq. (3) can be compared the fourth threshold value. According to one embodiment, a rotation angle outside of 50 degrees is considered unacceptable and the match is rejected as a false accept. Otherwise, the test succeeds and the matches are accepted.

The steps for biometric false accept error processing are preferably embodied in an executable computer program that is stored in a computer readable medium, such as the ROM 102, as one or more sequences of instructions that impart technical functionality into a computer processing system. Just prior to execution, the one or more sequences of instructions are loaded in to an execution memory area of the microprocessor 104 from which they are ultimately performed. Not all of the steps have to be performed by a single microprocessor, such as processor 104. Rather, some of the instructions can be stored separate from the smartcard 100 and can be executed by a processing unit completely apart from the smartcard 100, for example in microprocessor 114, or in another remote unit coupled to either the smartcard 100 or the smartcard reader 110. Moreover, selected steps can be performed by executable object code, while others are interpreted and then executed at runtime.

According to one embodiment, a personal computer will be coupled to the smartcard reader and the fingerprint sensor. Moreover, the personal computer will have connectivity to the Internet or an intranet, for example through an internet access provider, an internet service provider, or a local area network. A remote server on the network, the remote server including an application program such as a HTTP, CGI, ASP, Perl or XLM based banking or information system, will request authentication of a user at the personal computer. In turn, the personal computer will initiate instructions that cause the biometric sensor to sense biometric data from the user, and then cause the smartcard reader to validate the sensed data with data stored on the smartcard inserted into the smartcard reader. Once the smartcard has validated the sensed biometric data, an accept or reject signal is then transferred back to the personal computer. The personal computer can, in turn, send the accept, reject, or another acknowledgement signal back the remote server. Networking protocols such as TCP/IP or ATM, which are generally known in the art, can provide the connectivity transport between the computer systems on the network.

Upon review the detailed description and drawings, one of skill in the art could make certain modifications or improvements to the subject invention, yet not depart from its overall spirit. For example, cryptographic functions may be used to encode data on the smartcard 100, or to protect communication channels from rote copying. For example, the techniques described in U.S. Patent Application Serial No. 09/306,148, filed April 26, 1999, entitled, "HIGH SECURITY BIOMETRIC AUTHENTICATION OF USE OF PUBLIC KEY IN A PUBLIC KEY ENCRYPTION SYSTEM" can be employed. In another embodiment, the actual initial tests performed on the templates can include tests to detect spoofing. For example, the methods disclosed in U.S. Provisional Application 60/158,423, filed October 7, 1999, entitled "METHOD AND APPARATUS FOR DETERMINING A LIVING FINGER ON A FINGERPRINT SENSOR" can be employed.

Further, the false accept error processing techniques can be moved completely off of the smartcard 100 and into another device, such as a computer or server attached to the smartcard reader 110 or the sensor 116.

Numerous other modifications can be made, such as different ways of comparing a measured value to a valid value, or matched values to threshold values. Other normalization techniques can also be employed, such as conversion of angles to particular quadrants, or taking absolute values of the matched values. Even the data structures could be modified so they are modestly different or are amalgamations of the structures described above. Furthermore, the comparisons to threshold values can be made immediately after individual or particular calculations are made, or after all the calculations are made, so that a minimal number of instruction cycles are used when false accept error processing. Accordingly, the invention is to be interpreted consistent with the accompanying claims, rather than strictly limiting it to the detailed embodiments described above.

## Claims

1.  A method for detecting a false accept of a biometric template match, comprising:

    - generating (508) a sensed biometric template comprising a plurality of sensed minutia;
    - comparing (516) a subset of said sensed biometric template with a reference biometric template comprising a plurality of valid minutia;

    the method further **characterized by**:

    - generating (528) said biometric template match if said sensed biometric template matches a portion of said reference biometric template;
    - calculating (612) a total distance difference between said plurality of sensed minutia and said plurality of valid minutia;
    - comparing (620) said total distance difference with a threshold separation difference;
    - rejecting (624) said biometric template match if said total distance difference is outside of said threshold separation difference;
    - calculating (616) a rotation angle between said plurality of sensed minutia and said plurality of valid minutia;
    - comparing (628) said rotation angle with a threshold rotation angle; and
    - rejecting (632) said biometric template match if said rotation angle is outside of said threshold rotation angle.

2.  The method of claim 1, further comprising:

- calculating (636) an alternate rotation angle between said plurality of sensed minutiae and said plurality of valid minutia, wherein said alternate rotation angle is calculated using a means independent of said rotation angle calculation (616);
- comparing (640) said alternate rotation angle to a threshold alternate rotation angle; and
- rejecting (644) said biometric template match if said alternate rotation angle is outside of said threshold alternate rotation angle.

3. The method of claim 2, wherein said act of calculating said alternate rotation angle comprises:

- determining (704) a first centroid of said plurality of valid minutiae;
- determining (708) a second centroid of said plurality of sensed minutiae;
- determining (720) a first difference between a first coordinate of one of said plurality of valid minutia and a first coordinate of said first centroid;
- determining (724) a second difference between a first coordinate of one of said plurality of sensed minutia and a first coordinate of said second centroid;
- determining (732) a third difference between a second coordinate of one of said plurality of valid minutia and a second coordinate of said first centroid;
- determining (736) a fourth difference between a second coordinate of one of said plurality of sensed minutia and a second coordinate of said second centroid;
- multiplying (728) said first difference by said second difference to create a first product;
- multiplying (740) said third difference by said fourth difference to create a second product; and
- summing (744) said first product and said second product to create a first portion of said alternate rotation angle.

4. The method of claim 3, further comprising:

- multiplying (760) said third difference by said second difference to create a third product;
- multiplying (764) said first difference by said fourth difference to create a fourth product;
- subtracting (768) said fourth product from said third product to create a second portion of said alternate rotation angle; and
- dividing (776) said first portion of said alternate rotation angle by said second portion of said alternate rotation angle to create a value corresponding to said alternate rotation angle.

5. The method of claim 2, wherein said act of comparing said alternate rotation angle includes:

- calculating (780) a difference between said alternate rotation angle and said rotation angle; and
- wherein said step of comparing (640) includes comparing said difference between said alternate rotation angle and said rotation angle to said threshold alternate rotation angle.

6. The method of claim 2, wherein said act of calculating (636) said rotation angle comprises averaging a difference between a plurality of sensed minutia angles and a plurality of matched minutia angles.

7. The method of claim 2, wherein said step of comparing (640) said alternate rotation angle to said threshold alternate rotation angle includes subtracting said alternate rotation angle from said rotation angle.

8. The method of any of claims 1 through 7, wherein said step of calculating (612) said total distance difference is performed using the formula:

$$\sum_{i=1}^{i=score} \left[ (x_{i-1} - x_i)^2 + (y_{i-1} - y_i)^2 \right]$$

- where x and y represent Cartesian coordinates for match minutia held one of either the sensed template (408) or the valid template (404),
- i represents the match iteration number of the minutia, and
- score is the number of matching minutia identified between the biometric templates (404, 408).

**9.** The method of claim 1 or 8, wherein said step of calculating said rotation angle is performed using the formula:

$$\frac{\sum_{i=0}^{i=score-1} \left[\beta_{A,i} - \beta_{B,i}\right]}{score}$$

- where $\beta$ represents a rotation angle of a biometric template,
- A and B represent the valid template (404) and the sensed template (408), respectively,
- i represents the match iteration number of the minutia, and
- score is the number of matching minutia identified between the biometric templates (404, 408).

**10.** The method of claim 3, 8, or 9, wherein said step of calculating said alternate rotation angle is performed using the formula:

$$\frac{\sum_{i=0}^{i=score} \left[\left(x_{A,i} - centroid_{A,x}\right) * \left(x_{B,i} - centroid_{B,x}\right) + \left(y_{A,i} - centroid_{A,y}\right) * \left(y_{B,i} - centroid_{B,y}\right)\right]}{\sum_{i=0}^{i=score} \left[\left(y_{A,i} - centroid_{A,y}\right) * \left(x_{B,i} - centroid_{B,x}\right) + \left(x_{A,i} - centroid_{A,x}\right) * \left(y_{B,i} - centroid_{B,y}\right)\right]}.$$

- where x and y represent Cartesian coordinates for match minutia held one of either the sensed template (408) or the valid template (404),
- A and B represent the valid template (404) and the sensed template (408), respectively,
- i represents the match iteration number of the minutia, and
- score is the number of matching minutia identified between the biometric templates (404, 408).

**11.** A computer program for execution in one or more biometric authentication devices, the computer program configured to cause one or more microprocessors to perform the steps in any of claims 1 through 10.

**12.** A biometric authentication system comprising:

a smartcard (100) comprising:

- a microprocessor (104);
- a random access memory (106) coupled to the microprocessor (104) and configured to hold a template of sensed biometric information, the template including a plurality of sensed minutia; and
- a read only memory (103) coupled to said microprocessor (104) and configured to hold a template of valid biometric information, the template including a plurality of valid minutia, and executable biometric testing software;
- wherein the biometric authentication system is configured to match said template of sensed biometric information with said template of valid biometric information and create a set of matched biometric information (400);

wherein the biometric system is further **characterized by** false accept software configured to cause said biometric authentication system to:

- calculate (612) a total distance difference measured between said plurality of sensed minutiae and said plurality of valid minutiae;
- compare (620) said total distance difference with a threshold separation difference;
- reject (624) said biometric template match if said total distance difference is outside of said threshold separation difference;
- calculate (616) a rotation angle between said plurality of sensed minutia and said plurality of valid minutiae;
- compare (628) said rotation angle with a threshold rotation angle; and
- reject (632) said biometric template match if said rotation angle is outside of said threshold rotation angle.

**13.** The biometric system of claim 12, wherein said false accept software is further configured to cause said biometric system to:

- calculate (636) an alternate rotation angle between said plurality of sensed minutiae and said plurality of valid minutia, wherein said alternate rotation angle is calculated using a means independent of said rotation angle calculation (616);
- compare (640) said alternate rotation angle to a threshold alternate rotation angle; and
- reject (644) said biometric template match if said alternate rotation angle is outside of said threshold alternate rotation angle.

**14.** The biometric system of claims 12 or 13, further comprising:

- a smart card reader (110) configured to be communicatively coupled to said smartcard (100); and
- a biometric sensing means (116) configured to be communicatively coupled.to said smartcard (100); and
- a first computer configured to be communicatively coupled to said smartcard reader (100), said first computer further configured to initiate and dispatch data and commands to and from said smartcard (100), including information corresponding to said false accept software.

**15.** The biometric system of claim 14, further comprising a second computer communicatively coupled to said first computer, the second computer including a networked application, the networked application configured to receive data and commands from the first computer corresponding to said false accept software.

**Patentansprüche**

**1.** Verfahren für das Detektieren einer falschen Akzeptanz eines biometrischen Vorlagenabgleichs, aufweisend:

- Erzeugen (508) einer erfassten biometrischen Vorlage, aufweisend eine Mehrzahl von erfassten Minuzien;
- Vergleichen (516) einer Teilmenge der erfassten biometrischen Vorlage mit einer biometrischen Referenzvorlage, welche eine Mehrzahl von gültigen Minuzien aufweist;

wobei das Verfahren ferner charakterisiert wird durch:

- Erzeugen (528) des biometrischen Vorlagenabgleichs, falls die erfasste biometrische Vorlage mit einem Teil der biometrischen Referenzvorlage übereinstimmt;
- Berechnen (612) einer Summe der Abstandsdifferenzen zwischen der Mehrzahl von erfassten Minuzien und der Mehrzahl von gültigen Minuzien;
- Vergleichen (620) der Summe der Abstandsdifferenzen mit einem Separationsdifferenz-Schwellenwert;
- Zurückweisen (624) des biometrischen Vorlagenabgleichs, falls sich die Summe der Abstandsdifferenzen außerhalb des Separationsdifferenz-Schwellenwertes befindet;
- Berechnen (616) eines Rotationswinkels zwischen der Mehrzahl von erfassten Minuzien und der Mehrzahl von gültigen Minuzien;
- Vergleichen (628) des Rotationswinkels mit einem Rotationswinkel-Schwellenwert; und
- Zurückweisen (632) des biometrischen Vorlagenabgleichs, falls sich der Rotationswinkel außerhalb des Rotationswinkel-Schwellenwertes befindet.

**2.** Verfahren gemäß Anspruch 1, ferner aufweisend:

- Berechnen (636) eines Ersatz-Rotationswinkels zwischen der Mehrzahl von erfassten Minuzien und der Mehrzahl an gültigen Minuzien, wobei der Ersatz-Rotationswinkel unter der Verwendung eines von der Rotationswinkel-Berechnung (616) unabhängigen Mittels berechnet wird;
- Vergleichen (640) des Ersatz-Rotationswinkels mit einem Ersatz-Rotationswinkel-Schwellenwert; und
- Zurückweisen (644) des biometrischen Vorlagenabgleichs, falls sich der Ersatz-Rotationswinkel außerhalb des Ersatz-Rotationswinkel-Schwellenwertes befindet.

**3.** Verfahren gemäß Anspruch 2, wobei der Vorgang des Berechnens des Ersatz-Rotationswinkels aufweist:

- Bestimmen (704) eines ersten Schwerpunktes der Mehrzahl von gültigen Minuzien;

- Bestimmen (708) eines zweiten Schwerpunktes der Mehrzahl von erfassten Minuzien;
- Bestimmen (720) einer ersten Differenz zwischen einer ersten Koordinate eines der Mehrzahl von gültigen Minuzien und einer ersten Koordinate des ersten Schwerpunktes;
- Bestimmen (724) einer zweiten Differenz zwischen einer ersten Koordinate eines der Mehrzahl von erfassten Minuzien und einer ersten Koordinate des zweiten Schwerpunktes;
- Bestimmen (732) einer dritten Differenz zwischen einer zweiten Koordinate eines der Mehrzahl von gültigen Minuzien und einer zweiten Koordinate des ersten Schwerpunktes;
- Bestimmen (736) einer vierten Differenz zwischen einer zweiten Koordinate eines der Mehrzahl von erfassten Minuzien und einer zweiten Koordinate des zweiten Schwerpunktes;
- Multiplizieren (728) der ersten Differenz mit der zweiten Differenz, so dass ein erstes Produkt erzeugt wird;
- Multiplizieren (740) der dritten Differenz mit der vierten Differenz, so dass ein zweites Produkt erzeugt wird;
- Summieren (744) des ersten Produkts und des zweiten Produkts, so dass ein erster Teil des Ersatz-Rotationswinkels erzeugt wird.

4. Verfahren gemäß Anspruch 3, ferner aufweisend:

- Multiplizieren (760) der dritten Differenz mit der zweiten Differenz, so dass ein drittes Produkt erzeugt wird;
- Multiplizieren (764) der ersten Differenz mit der vierten Differenz, so dass ein viertes Produkt erzeugt wird;
- Subtrahieren (768) des vierten Produkts vom dritten Produkt, so dass ein zweiter Teil des Ersatz-Rotationswinkels erzeugt wird; und
- Teilen (776) des ersten Teils des Ersatz-Rotationswinkels durch den zweiten Teil des Ersatz-Rotationswinkels, so dass ein Wert erzeugt wird, welcher mit dem Ersatz-Rotationswinkel korrespondiert.

5. Verfahren gemäß Anspruch 2, wobei der Vorgang des Vergleichens des Ersatz-Rotationswinkels aufweist:

- Berechnen (780) einer Differenz zwischen dem Ersatz-Rotationswinkel und dem Rotationswinkel;
- wobei der Schritt des Vergleichens (640), das Vergleichen der Differenz zwischen dem Ersatz-Rotationswinkel und dem Rotationswinkel mit dem Ersatz-Rotationswinkel-Schwellenwert aufweist.

6. Verfahren gemäß Anspruch 2, wobei der Vorgang des Berechnens (636) des Rotationswinkels, die Mittelwertbildung einer Differenz zwischen einer Mehrzahl von erfassten Minuzien-Winkeln und einer Mehrzahl von abgeglichenen Minuzien-Winkeln aufweist.

7. Verfahren gemäß Anspruch 2, wobei der Schritt des Vergleichens (640) des Ersatz-Rotationswinkels mit dem Ersatz-Rotationswinkel-Schwellenwert, das Subtrahieren des Ersatz-Rotationswinkels vom Rotationswinkel aufweist.

8. Verfahren gemäß einem der Ansprüchen 1 bis 7, wobei der Schritt des Berechnens (612) der Summe der Abstandsdifferenzen mit der Formel durchgeführt wird:

$$\sum_{i=1}^{i=score} \left[ (x_{i-1} - x_i)^2 + (y_{i-1} + y_i)^2 \right]$$

- wobei x und y die Kartesischen Koordinaten für das Abgleichen der festgehaltenen Minuzien mit entweder der erfassten Vorlage (408) oder der gültigen Vorlage (404) darstellen,
- i die Abgleich-Iterationsnummer der Minuzien darstellt, und
- score die Nummer der Abgleich-Minuzien ist, welche zwischen den beiden biometrischen Vorlagen (404, 408) festgestellt wurden.

9. Verfahren gemäß einem der Ansprüchen 1 oder 8, wobei der Schritt des Berechnens des Rotationswinkels unter Verwendung der Formel durchgeführt wird:

$$\frac{\sum_{i=0}^{i=score-1}\left[\beta_{A,i}-\beta_{B,i}\right]}{score}$$

- • wobei β den Rotationswinkel einer biometrischen Vorlage darstellt,
- • A und B die gültige Vorlage (404) bzw. die erfasste Vorlage (408) darstellen,
- • i die Abgleich-Iterationsnummer der Minuzien darstellt, und
- • score die Nummer der Abgleich-Minuzien ist, welche zwischen den beiden biometrischen Vorlagen (404, 408) festgestellt wurden.

10. Verfahren gemäß den Ansprüchen 3, 8, oder 9, wobei der Schritt des Berechnens des Ersatz-Rotationswinkels unter der Verwendung der Formel durchgeführt wird:

$$\frac{\sum_{i=0}^{i=score}\left[\left(x_{A,i}-centroid_{A,x}\right)*\left(x_{B,i}-centroid_{B,x}\right)+\left(y_{A,i}-centroid_{A,y}\right)*\left(y_{B,i}-centroid_{B,y}\right)\right]}{\sum_{i=0}^{i=score}\left[\left(y_{A,i}-centroid_{A,y}\right)*\left(x_{B,i}-centroid_{B,x}\right)+\left(x_{A,i}-centroid_{A,x}\right)*\left(y_{B,i}-centroid_{B,y}\right)\right]}$$

- • wobei x und y die Kartesischen Koordinaten für das Abgleichen der festgehaltenen Minuzien mit entweder der erfassten Vorlage (408) oder der gültigen Vorlage (404) darstellen,
- • A und B die gültige Vorlage (404) bzw. die erfasste Vorlage (408) darstellen,
- • i die Abgleich-Iterationsnummer der Minuzien darstellt, und
- • score die Nummer der Abgleich-Minuzien ist, welche zwischen den beiden biometrischen Vorlagen (404, 408) festgestellt wurde.

11. Computerprogramm, zur Ausführung in einem oder mehreren biometrischen Authentifizierungseinrichtungen, wobei das Computerprogramm eingerichtet ist, derart, dass es einen oder mehrere Mikroprozessoren dazu veranlasst die Schritte gemäß einem der Ansprüche 1 bis 10 auszuführen.

12. Biometrisches Authentifizierungssystem, aufweisend:

    eine Smart-Card (100) aufweisend:

- • einen Mikroprozessor (104);
- • einen mit dem Mikroprozessor (104) gekoppelten Direktzugriffsspeicher (106) derb eingerichtet ist, derart, dass er eine Vorlage von erfasster biometrischer Information speichert, wobei die Vorlage eine Mehrzahl von erfassten Minuzien aufweist; und
- • einen mit dem Mikroprozessor (104) gekoppelten Festwertspeicher (103) der eingerichtet ist, derart, dass er eine Vorlage von gültiger biometrischer Information speichert, wobei die Vorlage eine Mehrzahl von gültigen Minuzien und welcher eine ausführbare biometrische Testsoftware aufweist;
- • wobei das biometrische Authentifizierungssystem eingerichtet ist, derart, dass es die Vorlage von erfasster biometrischer Information mit der Vorlage von gültiger biometrischer Information abgleicht und einen Satz von abgeglichener biometrischer Information (400) erstellt;

wobei das biometrische System ferner durch eine Falsch-Akzeptanz-Software charakterisiert wird, welche eingerichtet ist, derart, das biometrische Authentifizierungssystem zu veranlassen:

- • eine Summe der Abstandsdifferenzen, welche zwischen der Mehrzahl von erfassten Minuzien und der Mehrzahl von gültigen Minuzien gemessen wird, zu berechnen (612);
- • die Summe der Abstandsdifferenzen mit einem Separationsdifferenz-Schwellenwert zu vergleichen (620);
- • den biometrischen Vorlagenabgleich, falls sich die Summe der Abstandsdifferenzen außerhalb des Separationsdifferenz-Schwellenwertes befindet, zurück zu weisen (624);

**EP 1 269 398 B1**

- einen Rotationswinkel zwischen der Mehrzahl von erfassten Minuzien und der Mehrzahl von gültigen Minuzien, zu berechnen (616);
- den Rotationswinkel mit einem Rotationswinkel-Schwellenwert zu vergleichen (628); und
- den biometrischen Vorlagenabgleich, falls sich der Rotationswinkel außerhalb des Rotationswinkel-Schwellenwertes befindet, zurück zu weisen (632).

13. Biometrisches System gemäß Anspruch 12, wobei die Falsch-Akzeptanz-Software ferner eingerichtet ist, derart, das biometrische System zu veranlassen:

- einen Ersatz-Rotationswinkel zwischen der Mehrzahl von erfassten Minuzien und der Mehrzahl an gültigen Minuzien zu berechnen (636), wobei der Ersatz-Rotationswinkel unter der Verwendung eines von der Rotationswinkel-Berechnung (616) unabhängigen Mittels berechnet wird;
- den Ersatz-Rotationswinkel mit einem Ersatz-Rotationswinkel-Schwellwert zu vergleichen (640); und
- den biometrischen Vorlagenabgleich, falls sich der Ersatz-Rotationswinkel außerhalb des Ersatz-Rotationswinkel-Schwellwertes befindet, zurück zu weisen (644).

14. Biometrisches System gemäß den Ansprüchen 12 oder 13, ferner aufweisend:

- Eine Smart-Card-Lese-Vorrichtung (110) eingerichtet, derart, dass sie kommunikativ mit der Smart-Card (100) gekoppelt ist; und
- ein biometrisches Abtast-Mittel (116) eingerichtet, derart, dass es kommunikativ mit der Smart-Card (100) gekoppelt ist; und
- einen ersten Computer, welcher eingerichtet ist, derart, dass er kommunikativ mit der Smart-Card-Lese-Vorrichtung (100) gekoppelt ist, wobei der erste Computer ferner eingerichtet ist, Daten und Befehle zu und von der Smart-Card (100) zu initialisieren und zu senden, welche Informationen gemäß der Falsch-Akzeptanz-Software aufweisen.

15. Biometrisches System gemäß Anspruch 14, ferner aufweisend einen zweiten Computer, welcher kommunikativ mit dem ersten Computer gekoppelt ist, wobei der zweite Computer eine rechnerübergreifende Applikation aufweist, wobei die rechnerübergreifende Applikation eingerichtet ist, derart, dass sie gemäß der Falsch-Akzeptanz-Software Daten und Befehle von dem ersten Computer empfängt.

**Revendications**

1. Méthode de détection d'une fausse acceptation d'une correspondance de gabarit biométrique, comprenant les étapes consistant à :

générer (508) un gabarit biométrique détecté comprenant une pluralité de points caractéristiques détectées, comparer (516) un sous-ensemble dudit gabarit biométrique détecté avec un gabarit biométrique de référence comprenant une pluralité de points caractéristiques valide ;
la méthode étant en outre **caractérisée par** les étapes consistant à :

générer (528) ladite correspondance de gabarit biométrique si ledit gabarit biométrique détecté correspond à une partie dudit gabarit biométrique valide ;
calculer (612) une différence de distance totale entre ladite pluralité de points caractéristiques détectés et ladite pluralité de points caractéristiques valides ;
comparer (620) ladite différence de distance totale à un seuil de différence de séparation ;
rejeter (624) ladite correspondance de gabarit biométrique si ladite différence de distance totale est en dehors dudit seuil de différence de séparation ;
calculer (616) un angle de rotation entre ladite pluralité de points caractéristiques détectés et ladite pluralité de points caractéristiques valides ;
comparer (628) ledit angle de rotation à un seuil d'angle de rotation ; et
rejeter (632) ladite correspondance de gabarit biométrique si ledit angle de rotation est en dehors dudit seuil d'angle de rotation.

2. Méthode selon la revendication 1, comprenant en outre les étapes consistant à :

13

calculer (636) un angle de rotation alternatif entre ladite pluralité de points caractéristiques détectés et ladite pluralité de points caractéristiques valides, où ledit angle de rotation alternatif est calculé en utilisant un moyen un indépendant dudit calcul d'angle de rotation (616) ;

comparer (640) ledit angle de rotation alternatif à un seuil de l'angle de rotation alternatif ; et

rejeter (644) ladite correspondance de gabarit biométrique si ledit autre angle rotation est en dehors dudit seuil d'angle de rotation alternatif.

3. Méthode selon la revendication 2, dans laquelle laditeopération de calcul dudit angle de rotation alternatif comporte les étapes consistant à :

déterminer (704) un premier centroïde de ladite pluralité de points caractéristiques valides ;

déterminer (708) un deuxième centroïde de ladite pluralité de points caractéristiques détectés ;

déterminer (720) une première différence entre une première coordonnée de l'une de ladite pluralité de points caractéristiques valides et une première coordonnée dudit premier centroïde ;

déterminer (724) une deuxième différence entre une première coordonnée de l'une de ladite pluralité de points caractéristiques détectés et une première coordonnée dudit deuxième centroïde ;

déterminer (732) une troisième différence entre une deuxième coordonnée de l'une de ladite pluralité de points caractéristiques valides et une deuxième coordonnée dudit premier centroïde ;

déterminer (736) une quatrième différence entre une deuxième coordonnée de l'une de ladite pluralité de points caractéristiques détectés et une deuxième coordonnée dudit deuxième centroïde ;

multiplier (728) ladite première différence par ladite deuxième différence pour obtenir un premier produit ;

multiplier (740) ladite troisième différence par ladite quatrième différence pour obtenir un deuxième produit ; et

faire la somme (744) desdits premier et deuxième produits pour obtenir une première composante dudit angle de rotation alternatif.

4. Méthode selon la revendication 3, comportant en outre les étapes consistant à :

multiplier (760) ladite troisième différence par ladite deuxième différence pour obtenir un troisième produit ;

multiplier (764) ladite première différence par ladite quatrième différence pour obtenir un quatrième produit ;

soustraire (768) ledit quatrième produit dudit troisième produit pour obtenir une deuxième composante dudit angle de rotation alternatif ; et

diviser (776) ladite première composante dudit angle de rotation alternatif par ladite deuxième composante dudit angle de rotation alternatif pour obtenir une valeur correspondant audit angle de rotation alternatif.

5. Méthode selon la revendication 2, dans laquelle ladite opération de comparaison dudit angle de rotation alternatif comporte les étapes consistant à :

calculer (780) une différence entre ledit angle de rotation alternatif et ledit angle de rotation ; et

dans laquelle ladite étape de comparaison (640) comprend une comparaison de ladite différence entre ledit angle de rotation alternatif et ledit angle de rotation avec ledit seuil de l'angle de rotation alternatif.

6. Méthode selon la revendication 2, dans laquelle ladite opération de calcul (636) dudit angle de rotation comporte un calcul de moyenne d'une différence entre une pluralité d'angles de points caractéristiques détectés et une pluralité d'angles de points caractéristiques correspondants.

7. Méthode selon la revendication 2, dans laquelle ladite étape de comparaison (640) dudit angle de rotation alternatif audit seuil de l'angle de rotation alternatif inclut la soustraction dudit angle de rotation alternatif à partir dudit angle de rotation.

8. Méthode selon l'une quelconque des revendications 1 à 7, dans laquelle ladite étape de calcul (612) de ladite différence de distance totale est effectuée au moyen de la formule :

$$\sum_{i=1}^{i=score}\left[\left(x_{i-1}-x_i\right)^2+\left(y_{i-1}-y_i\right)^2\right]$$

où x et y représentent les coordonnées cartésiennes des correspondances de points caractéristiques retenus pour l'un ou l'autre du profil valide (404) et du profil détecté (408),

i représente le numéro d'itération de correspondance des points caractéristiques, et

score est le nombre de correspondances des points caractéristiques identifiés entre les profils biométriques (404, 408).

9. Méthode selon la revendication 1 ou 8, dans laquelle ladite étape de calcul dudit angle de rotation est réalisée au moyen de la formule :

$$\frac{\sum_{i=1}^{i=score-1}\left[\beta_{A,i}-\beta_{B,i}\right]}{score}$$

où β représente un angle de rotation d'un gabarit biométrique,

A et B représentent le profil valide (404) et le profil détecté (408), respectivement,

i représente le numéro d'itération de correspondance des points caractéristiques, et

score est le nombre de correspondances de points caractéristiques identifiés entre les profils biométriques (404, 408).

10. Méthode selon la revendication 3, 8 ou 9, dans laquelle l'étape de calcul dudit angle de rotation alternatif est effectuée au moyen de la formule :

$$\frac{\sum_{i=0}^{i=score}\left[\left(x_{A,i}-centroïde_{A,x}\right)*\left(x_{B,i}-centroïde_{B,x}\right)+\left(y_{A,i}-centroïde_{A,y}\right)*\left(y_{B,i}-centroïde_{B,y}\right)\right]}{\sum_{i=0}^{i=score}\left[\left(y_{A,i}-centroïde_{A,y}\right)*\left(x_{B,i}-centroïde_{B,x}\right)+\left(x_{A,i}-centroïde_{A,x}\right)*\left(y_{B,i}-centroïde_{B,y}\right)\right]}$$

où x et y représentent les coordonnées cartésiennes des correspondances de points caractéristiques retenus pour l'un ou l'autre du profil détecté (408) et du profil valide (404),

A et B représentent le profil valide (404) et le profil détecté (408) respectivement ;

i représente le numéro d'itération de correspondance des points caractéristiques, et

score est le nombre de correspondances de points caractéristiques identifiés entre les profils biométriques (404, 408).

11. Un programme informatique pour l'exécution d'un ou plusieurs dispositifs d'authentification biométrique, le programme informatique étant configuré pour qu'un ou plusieurs microprocesseurs exécutent les étapes décrites dans l'une quelconque des revendications 1 à 10.

12. Un système d'authentification biométrique comprenant :

une carte à puce (100) comportant
un microprocesseur (104) ;
une mémoire vive (RAM) (106) couplée au microprocesseur (104) et configurée de façon à mémoriser un profil d'informations biométriques détectées, le profil comportant une pluralité de points caractéristiques détectés ; et

une mémoire morte (ROM) (103) couplée audit microprocesseur (104) et configurée de façon à mémoriser un profil d'informations biométriques valides, le profil comportant une pluralité de points caractéristiques valides, et à stocker un logiciel exécutable de test biométrique ;

dans lequel le système d'identification biométrique est configuré de façon à faire concorder ledit profil d'informations biométriques détectées avec ledit profil d'informations biométriques valides, et à produire un ensemble d'informations biométriques correspondantes (400) ;

dans lequel le système biométrique est en outre **caractérisé par** un logiciel de détection de fausses acceptations configuré de façon à conduire ledit système d'authentification biométrique à :

calculer (612) une différence de distance totale entre ladite pluralité de points caractéristiques détectés et ladite pluralité de points caractéristiques valides ;

comparer (620) ladite différence de distance totale à un seuil de différence de distance totale ;

rejeter (624) la dite correspondance de gabarit biométrique si ladite différence de distance totale est en dehors dudit seuil de différence de séparation ;

calculer (616) un angle de rotation entre ladite pluralité de points caractéristiques détectés et ladite pluralité de points caractéristiques valides ;

comparer (628) ledit angle de rotation à un seuil d'angle de rotation ; et

rejeter (632) ladite correspondance de gabarit biométrique si ledit angle de rotation est en dehors dudit seuil d'angle de rotation.

**13.** Système biométrique selon la revendication 12, dans lequel le logiciel de détection de fausses acceptations est configuré de façon à conduire ledit système d'authentification biométrique à :

calculer (636) un angle de rotation alternatif entre ladite pluralité de points caractéristiques détectés et ladite pluralité de points caractéristiques valide, où ledit angle de rotation alternatif est calculé en utilisant un moyen indépendant dudit calcul d'angle de rotation (616) ;

comparer (640) ledit angle de rotation alternatif à un seuil de l'angle de rotation alternatif; et

rejeter (644) ladite correspondance de gabarit biométrique si ledit angle de rotation alternatif est en dehors dudit seuil de l'autre valeur d'angle de rotation.

**14.** Système biométrique selon la revendication 12 ou 13, comprenant en outre :

un lecteur de carte à puce (110) configuré pour être couplé de façon à communiquer avec ladite carte à puce (100) ; et

un moyen de détection biométrique (116) configuré pour être couplé de façon à communiquer avec ladite carte à puce (100) ; et

un premier ordinateur configuré pour être couplé de façon à communiquer avec le lecteur de carte à puce (100), ledit premier ordinateur étant en outre configuré pour élaborer et distribuer des données et des instructions à destination ou en provenance de ladite carte à puce (100), y compris des informations correspondant audit logiciel de détection de fausses acceptations.

**15.** Système biométrique selon la revendication 14, comprenant en outre un deuxième ordinateur couplé de façon à communiquer avec ledit premier ordinateur, le deuxième ordinateur étant muni d'une application réseau pour recevoir des données et des instructions en provenance du premier ordinateur correspondant audit logiciel de détection de fausses acceptations.

FIG. 1

FIG. 2

FIG. 3

FIG. 4

FIG. 5

POST
PROCESS

536

604

SCORE <
THRESH$_2$

YES

608

REJECT

NO

612

CALCULATE
SEPARATION

616

CALCULATE
ROTATION
ANGLE

620

SEPARATION
> THRESH$_3$

628

ANGLE W/IN
THRESH$_4$

632

NO

NO

REJECT

YES

YES

624

REJECT

ALT
ROTATION
ANGLE

636

640

ROTATION
W/IN
THRESH$_5$

YES

NO

644

REJECT

648

ACCEPT

END

FIG. 6

FIG. 7

FIG. 8A

FIG. 8B

FIG. 8C

FIG. 9A

FIG. 9B

FIG. 9C

FIG. 10A

FIG. 10B

FIG. 10C